(19) Europäisches Patentamt
European Patent Office
Office européen des brevets

(11) **EP 4 644 188 A1**

(12) **EUROPEAN PATENT APPLICATION**
published in accordance with Art. 153(4) EPC

(43) Date of publication:
05.11.2025 Bulletin 2025/45

(21) Application number: 23910920.0

(22) Date of filing: 29.12.2023

(51) International Patent Classification (IPC):
*B60R 13/08* (2006.01)    *B60L 3/00* (2019.01)
*B32B 27/20* (2006.01)    *B32B 15/00* (2006.01)
*B32B 15/08* (2006.01)    *B32B 3/08* (2006.01)
*H01M 50/242* (2021.01)

(52) Cooperative Patent Classification (CPC):
B32B 3/08; B32B 15/00; B32B 15/08; B32B 27/20;
B60L 3/00; B60R 13/08; H01M 50/242

(86) International application number:
PCT/CN2023/143162

(87) International publication number:
WO 2024/141006 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2022 CN 202211729452

(71) Applicant: BYD Company Limited
Shenzhen, Guangdong 518118 (CN)

(72) Inventors:
• WAN, Long
Shenzhen, Guangdong 518118 (CN)

• LI, Peng
Shenzhen, Guangdong 518118 (CN)
• PENG, Qingbo
Shenzhen, Guangdong 518118 (CN)
• LU, Zhipei
Shenzhen, Guangdong 518118 (CN)
• ZHU, Yan
Shenzhen, Guangdong 518118 (CN)

(74) Representative: Schott, Jakob Valentin
Wuesthoff & Wuesthoff
Patentanwälte und Rechtsanwalt PartG mbB
Schweigerstraße 2
81541 München (DE)

(54) **GUARD PLATE AND VEHICLE**

(57)    A protective plate, including: a metal plate; a glass fiber reinforced resin layer, where the glass fiber reinforced resin layer includes a first glass fiber reinforced resin layer and a second glass fiber reinforced resin layer, the first glass fiber reinforced resin layer is located on a side of the metal plate, and the second glass fiber reinforced resin layer is located on a side of the metal plate facing away from the first glass fiber reinforced resin layer; and a carbon fiber reinforced resin layer, where the carbon fiber reinforced resin layer includes a first carbon fiber reinforced resin layer and a second carbon fiber reinforced resin layer, the first carbon fiber reinforced resin layer is located on a side of the first glass fiber reinforced resin layer facing away from the metal plate, and the second carbon fiber reinforced resin layer is located on a side of the second glass fiber reinforced resin layer facing away from the metal plate. The metal plate is sealed by the glass fiber reinforced resin layer and/or the carbon fiber reinforced resin layer. The metal plate, the glass fiber reinforced resin layer, and the carbon fiber reinforced resin layer satisfy the following condition:

$$\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} > 0.046 .$$

1

301

201

10

40

202

302

30 20

FIG. 1

**Description**

## CROSS-REFERENCE TO RELATED APPLICATIONS

The present disclosure claims priority to and benefits of Chinese Patent Application No. 202211729452.4, filed on December 30, 2022 and entitled "PROTECTIVE PLATE AND VEHICLE". The entire content of the above-referenced disclosure is incorporated herein by reference.

## FIELD

The present disclosure relates to the field of vehicle technologies, and in particular, to a protective plate and a vehicle.

## BACKGROUND

Generally, a battery of a new energy vehicle is arranged at the bottom of the vehicle. In this way, interior space of the vehicle can be effectively maximized, and a power battery can be protected when the electric vehicle is subjected to a front collision. However, during actual traveling of the new energy vehicle, working conditions at the bottom of the vehicle are complex. For example, when passing over a pothole, a bump, or a stone road, the bottom of the vehicle is extremely susceptible to impact and scratches, posing a huge hidden danger to safety of the new energy vehicle.
Currently, a steel plate is usually used as a protective plate of the new energy vehicle to ensure strength and impact resistance of the protective plate. In addition, an anti-corrosion layer is formed on a surface of the steel plate through electrophoresis and spray to prevent the steel plate from being corroded. The existing protective plate has a problem of heavy weight and weak resistance to scratching, which easily causes an anti-corrosion failure of the protective plate. An overall protective effect of the protective plate needs to be improved.

## SUMMARY

The present disclosure is intended to resolve at least one of the foregoing technical problems existing in the related art. Therefore, an objective of the present disclosure is to provide a protective plate. The protective plate has advantages of light weight, high strength, strong resistance to scratching, and good overall protective performance.
According to a first aspect of the present disclosure, a protective plate is provided, including: a metal plate; a glass fiber reinforced resin layer, where the glass fiber reinforced resin layer includes a first glass fiber reinforced resin layer and a second glass fiber reinforced resin layer, the first glass fiber reinforced resin layer is located on a side of the metal plate, and the second glass fiber reinforced resin layer is located on a side of the metal plate facing away from the first glass fiber reinforced resin layer; and a carbon fiber reinforced resin layer, where the carbon fiber reinforced resin layer includes a first carbon fiber reinforced resin layer and a second carbon fiber reinforced resin layer, the first carbon fiber reinforced resin layer is located on a side of the first glass fiber reinforced resin layer facing away from the metal plate, and the second carbon fiber reinforced resin layer is located on a side of the second glass fiber reinforced resin layer facing away from the metal plate. The metal plate is sealed by the glass fiber reinforced resin layer and/or the carbon fiber reinforced resin layer. The metal plate, the glass fiber reinforced resin layer, and the carbon fiber reinforced resin layer satisfy the following condition:

$$\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} > 0.046.$$

$d_0$ is a thickness of the glass fiber reinforced resin layer in a unit of mm. $d_1$ is a thickness of the carbon fiber reinforced resin layer in a unit of mm. $d_2$ is a thickness of the metal plate in a unit of mm. $\rho_0$ is density of the glass fiber reinforced resin layer in a unit of g/cm$^3$. $\rho_1$ is density of the carbon fiber reinforced resin layer in a unit of g/cm$^3$. $\rho_2$ is density of the metal plate in a unit of g/cm$^3$. $\sigma_0$ is tensile strength of the glass fiber reinforced resin layer in a unit of MPa. $\sigma_1$ is tensile strength of the carbon fiber reinforced resin layer in a unit of MPa. $\sigma_2$ is tensile strength of a metal plate in a unit of MPa.

In some implementations of the present disclosure, $\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} < 0.18$ .

In some implementations of the present disclosure, the thickness $d_0$ mm of the glass fiber reinforced resin layer is between 1.0 mm and 2.0 mm. The density $\rho_0$ g/cm$^3$ of the glass fiber reinforced resin layer is between 1.5 g/cm$^3$ and 1.9 g/cm$^3$. The tensile strength $\sigma_0$ MPa of the glass fiber reinforced resin layer is between 280 MPa and 380 MPa.
In some implementations of the present disclosure, the thickness $d_1$ mm of the carbon fiber reinforced resin layer is between 1.0 mm and 2.0 mm. The density $\rho_1$ g/cm$^3$ of the carbon fiber reinforced resin layer is between 1.2 g/cm$^3$ and 1.5 g/cm$^3$. The tensile strength $\sigma_1$ MPa of the carbon fiber reinforced resin layer is between 760 MPa and 860 MPa.

In some implementations of the present disclosure, the thickness $d_2$ mm of the metal plate is between 0.5 mm and 1.5 mm. The density $\rho_2$ g/cm$^3$ of the metal plate is between 7.8 g/cm$^3$ and 8.7 g/cm$^3$. The tensile strength $\sigma_2$ MPa of the metal plate is between 590 MPa and 1180 MPa.

In some implementations of the present disclosure, the protective plate further includes a fiber reinforced resin frame. The fiber reinforced resin frame is located between the first glass fiber reinforced resin layer and the second glass fiber reinforced resin layer, the metal plate is located inside the fiber reinforced resin frame, a top surface of the fiber reinforced resin frame is integrally connected to the first glass fiber reinforced resin layer, and a bottom surface of the fiber reinforced resin frame is integrally connected to the second glass fiber reinforced resin layer. Alternatively, the fiber reinforced resin frame is located between the first carbon fiber reinforced resin layer and the second carbon fiber reinforced resin layer, the metal plate is located inside the fiber reinforced resin frame, a top surface of the fiber reinforced resin frame is integrally connected to the first carbon fiber reinforced resin layer, and a bottom surface of the fiber reinforced resin frame is integrally connected to the second carbon fiber reinforced resin layer.

In some implementations of the present disclosure, the thickness of the glass fiber reinforced resin layer is the same as the thickness of the carbon fiber reinforced resin layer.

In some implementations of the present disclosure, a thickness of the first glass fiber reinforced resin layer is the same as a thickness of the second glass fiber reinforced resin layer. A thickness of the first carbon fiber reinforced resin layer is the same as a thickness of the second carbon fiber reinforced resin layer.

In some implementations of the present disclosure, the thickness of the first glass fiber reinforced resin layer, the thickness of the second glass fiber reinforced resin layer, the thickness of the first carbon fiber reinforced resin layer, and the thickness of the second carbon fiber reinforced resin layer are the same.

According to a second aspect of the present disclosure, a vehicle is provided, including a battery pack and the foregoing protective plate. The protective plate is arranged below the battery pack.

In some implementations of the present disclosure, a buffer zone is provided between the battery pack and the protective plate.

In some implementations of the present disclosure, the buffer zone is filled with a buffer layer, and the buffer layer is selected from a honeycomb material or a hard foam material.

According to the protective plate provided in the present disclosure, the metal plate is sealed by the glass fiber reinforced resin layer and/or the carbon fiber reinforced resin layer, so that the metal plate can be effectively protected, and the metal plate is prevented from being corroded by external factors such as water vapor, thereby avoiding a problem of anti-corrosion failure of the protective plate. In addition, the glass fiber reinforced resin layer and the carbon fiber reinforced resin layer both have a feature of high hardness, so that resistance to scratching of the protective plate can be significantly improved by using the glass fiber reinforced resin layer and the carbon fiber reinforced resin layer as protective layers of the protective plate. Moreover, a composite structure is formed by the glass fiber reinforced resin layer, the carbon fiber reinforced resin layer, and the metal plate, so that strength and impact resistance of the protective plate can be improved, and the protective plate can be lightweight. In addition, in this solution, the glass fiber reinforced resin layer is arranged on an outer side of the metal plate, and the carbon fiber reinforced resin layer is arranged on an outer side of the glass fiber reinforced resin layer. In other words, the glass fiber reinforced resin layer having good toughness is used as an inner protective layer of the protective plate, and the carbon fiber reinforced resin layer having good stiffness is used as an outer protective layer of the protective plate. This can further improve overall strength of the protective plate, so that the protective plate has an excellent protective effect.

Further, when the thickness $d_0$ mm of the glass fiber reinforced resin layer, the thickness $d_1$ mm of the carbon fiber reinforced resin layer, the thickness $d_2$ mm of the metal plate, the density $\rho_0$ g/cm$^3$ of the glass fiber reinforced resin layer, the density $\rho_1$ g/cm$^3$ of the carbon fiber reinforced resin layer, the density $\rho_2$ g/cm$^3$ of the metal plate, the tensile strength $\sigma_0$ MPa of the glass fiber reinforced resin layer, the tensile strength $\sigma_1$ MPa of the carbon fiber reinforced resin layer, and the tensile strength $\sigma_2$ MPa of the metal plate satisfy $\dfrac{d_2}{d_0 + d_1 + d_2} * \dfrac{\rho_2}{\rho_0 + \rho_1 + \rho_2} * \dfrac{\sigma_2}{\sigma_0 + \sigma_1 + \sigma_2} > 0.046$, , a bearing capability of the protective plate can be improved. This helps ensure that when the protective plate is subjected to a specific level of impact energy, the glass fiber reinforced resin layer and the carbon fiber reinforced resin layer of the protective plate remain intact, thereby ensuring a use effect of the protective plate under working conditions with long-term impact.

The additional aspects and advantages of the present disclosure are provided in the following descriptions, some of which may become apparent from the following descriptions or may be learned from practices of the present disclosure.

## BRIEF DESCRIPTION OF THE DRAWINGS

The foregoing and/or additional aspects and advantages of the present disclosure may become apparent and easily understood from descriptions of implementations with reference to the following accompanying drawings.

FIG. 1 is an exploded view of a protective plate according to an implementation of the present disclosure; and
FIG. 2 is a schematic diagram of a partial structure of a vehicle according to an implementation of the present disclosure.

In the drawings:
protective plate 1; metal plate 10; glass fiber reinforced resin layer 20; first glass fiber reinforced resin layer 201; second glass fiber reinforced resin layer 202; carbon fiber reinforced resin layer 30; first carbon fiber reinforced resin layer 301; second carbon fiber reinforced resin layer 302; fiber reinforced resin frame 40; battery pack 2.

## DETAILED DESCRIPTION

The following describes implementations of the present disclosure in detail, and implementations described with reference to the accompanying drawings are exemplary. In descriptions of the present disclosure, it should be understood that an orientation or a positional relationship indicated by "upper", "lower", "front", "rear", "left", "right", "vertical", "horizontal", "top", "bottom", "inner", "outer", "peripheral", and the like is based on an orientation or a positional relationship shown in the accompanying drawings, and is merely for ease of describing the present disclosure and simplifying the descriptions, but does not indicate or imply that an indicated apparatus or element needs to have a specific orientation, and is constructed and operated in the specific orientation, and therefore cannot be understood as a limitation to the present disclosure.

The following describes a protective plate 1 according to an implementation of the present disclosure with reference to the accompanying drawings.

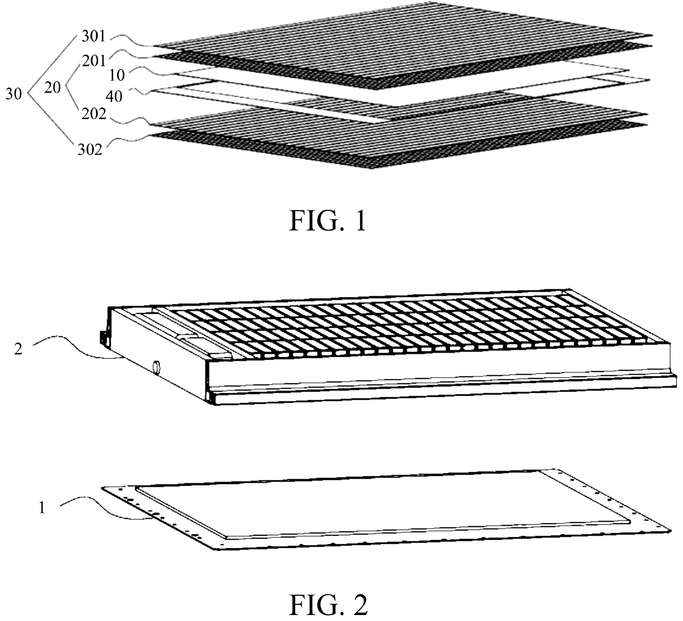

As shown in FIG. 1 and FIG. 2, the protective plate 1 includes a metal plate 10, a glass fiber reinforced resin layer 20, and a carbon fiber reinforced resin layer 30. The metal plate 10 is sealed by the glass fiber reinforced resin layer 20 and/or the carbon fiber reinforced resin layer 30. The glass fiber reinforced resin layer 20 includes a first glass fiber reinforced resin layer 201 and a second glass fiber reinforced resin layer 202. The first glass fiber reinforced resin layer 201 is located on a side of the metal plate 10, and the second glass fiber reinforced resin layer 202 is located on a side of the metal plate 10 facing away from the first glass fiber reinforced resin layer 201. The carbon fiber reinforced resin layer 30 includes a first carbon fiber reinforced resin layer 301 and a second carbon fiber reinforced resin layer 302. The first carbon fiber reinforced resin layer 301 is located on a side of the first glass fiber reinforced resin layer 201 away from the metal plate 10, and the second carbon fiber reinforced resin layer 302 is located on a side of the second glass fiber reinforced resin layer 202 away from the metal plate 10. The metal plate 10, the glass fiber reinforced resin layer 20, and the carbon fiber reinforced resin layer 30 satisfy the following condition:

$$\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} > 0.046.$$

$d_0$ is a thickness of the glass fiber reinforced resin layer in a unit of mm. $d_1$ is a thickness of the carbon fiber reinforced resin layer in a unit of mm. $d_2$ is a thickness of the metal plate in a unit of mm. $\rho_0$ is density of the glass fiber reinforced resin layer in a unit of g/cm$^3$. $\rho_1$ is density of the carbon fiber reinforced resin layer in a unit of g/cm$^3$. $\rho_2$ is density of the metal plate in a unit of g/cm$^3$. $\sigma_0$ is tensile strength of the glass fiber reinforced resin layer in a unit of MPa. $\sigma_1$ is tensile strength of the carbon fiber reinforced resin layer in a unit of MPa. $\sigma_2$ is tensile strength of a metal plate in a unit of MPa.

The metal plate 10 is sealed by the glass fiber reinforced resin layer 20 and/or the carbon fiber reinforced resin layer 30, so that the metal plate 10 can be effectively protected, and the metal plate 10 is prevented from being corroded by external factors such as water vapor, thereby avoiding a problem of anti-corrosion failure of the protective plate 1. In addition, the glass fiber reinforced resin layer and the carbon fiber reinforced resin layer both have a feature of high hardness, so that resistance to scratching of the protective plate 1 can be significantly improved by using the glass fiber reinforced resin layer and the carbon fiber reinforced resin layer as protective layers of the protective plate 1. Moreover, a composite structure is formed by the glass fiber reinforced resin layer 20, the carbon fiber reinforced resin layer 30, and the metal plate 10, so that strength and impact resistance of the protective plate 1 can be improved, and the protective plate 1 can be lightweight. In addition, in this solution, the glass fiber reinforced resin layer 20 is arranged on an outer side of the metal plate 10, and the carbon fiber reinforced resin layer 30 is arranged on an outer side of the glass fiber reinforced resin layer 20. In other words, the glass fiber reinforced resin layer 20 having good toughness is used as an inner protective layer of the protective plate 1, and the carbon fiber reinforced resin layer 30 having good stiffness is used as an outer protective layer of the protective plate 1. This can further improve overall strength of the protective plate 1, so that the protective plate 1 has an excellent protective effect.

Further, when the thickness $d_0$ mm of the glass fiber reinforced resin layer 20, the thickness $d_1$ mm of the carbon fiber reinforced resin layer 30, the thickness $d_2$ mm of the metal plate 10, the density $\rho_0$ g/cm$^3$ of the glass fiber reinforced resin layer 20, the density $\rho_1$ g/cm$^3$ of the carbon fiber reinforced resin layer 30, the density $\rho_2$ g/cm$^3$ of the metal plate 10,

the tensile strength $\sigma_0$ MPa of the glass fiber reinforced resin layer 20, the tensile strength $\sigma_1$ MPa of the carbon fiber reinforced resin layer 30, and the tensile strength $\sigma_2$ MPa of the metal plate 10 satisfy

$$\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} > 0.046$$ , a bearing capability of the protective plate 1 can be improved.

This helps ensure that when the protective plate 1 is subjected to a specific level of impact energy, the glass fiber reinforced resin layer 20 and the carbon fiber reinforced resin layer 30 of the protective plate remain intact, thereby ensuring use effect of the protective plate 1 under working conditions with long-term impact.

In some implementations of the present disclosure, that the metal plate 10 is sealed by the glass fiber reinforced resin layer 20 and/or the carbon fiber reinforced resin layer 30 may be that the first glass fiber reinforced resin layer 201 is connected to the second glass fiber reinforced resin layer 202 in a sealed manner in the glass fiber reinforced resin layer 20, or may be that the first carbon fiber reinforced resin layer 301 is connected to the second carbon fiber reinforced resin layer 302 in a sealed manner in the carbon fiber reinforced resin layer 30. In this way, the first glass fiber reinforced resin layer 201 is connected to the second glass fiber reinforced resin layer 202 in a sealed manner that are made of the same material, or the first carbon fiber reinforced resin layer 301 is connected to the second carbon fiber reinforced resin layer 302 in a sealed manner that are made of the same material. This helps improve binding force between the fiber reinforced resin layers of the protective plate 1, thereby improving overall strength of the protective plate 1.

In some implementations of the present disclosure, $\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} < 0.18$ .

The foregoing relationship is defined, so that the strength, the impact resistance, and a long-term service life of the protective plate 1 can be improved in combination with an influence of materials of the metal plate 10, the glass fiber reinforced resin layer 20, and the carbon fiber reinforced resin layer 30 on the impact resistance of the protective plate 1.

In the present disclosure, the thickness $d_0$ mm of the glass fiber reinforced resin layer 20 is between 1.0 mm and 2.0 mm. For example, the thickness of the glass fiber reinforced resin layer 20 may be 1.0 mm, 1.1 mm, 1.2 mm, 1.3 mm, 1.4 mm, 1.5 mm, 1.6 mm, 1.8 mm, or 2.0 mm. The density $\rho_0$ g/cm$^3$ of the glass fiber reinforced resin layer is between 1.5 g/cm$^3$ and 1.9 g/cm$^3$. For example, the density of the glass fiber reinforced resin layer 20 may be 1.5 g/cm$^3$, 1.6 g/cm$^3$, 1.7 g/cm$^3$, 1.8 g/cm$^3$, or 1.9 g/cm$^3$. The tensile strength $\sigma_0$ MPa of the glass fiber reinforced resin layer 20 is between 280 MPa and 380 MPa. For example, the tensile strength of the glass fiber reinforced resin layer 20 may be 280 MPa, 290 MPa, 300 MPa, 310 MPa, 320 MPa, 330 MPa, 340 MPa, 350 MPa, 360 MPa, 370 MPa, or 380 MPa. The glass fiber reinforced resin layer 20 has excellent properties such as high specific strength, high specific modulus, and corrosion resistance, and can provide good protection on the metal plate 10. The glass fiber reinforced resin layer 20 in the foregoing condition range is used to reduce weight, improve a protection effect on the metal plate 10, and improve impact resistance of the protective plate 1, thereby ensuring a long-term service effect of the protective plate.

In the present disclosure, the thickness $d_1$ mm of the carbon fiber reinforced resin layer 30 is between 1.0 mm and 2.0 mm. For example, the thickness of the carbon fiber reinforced resin layer 30 may be 1.0 mm, 1.1 mm, 1.2 mm, 1.3 mm, 1.4 mm, 1.5 mm, 1.6 mm, 1.8 mm, or 2.0 mm. The density $\rho_1$ g/cm$^3$ of the carbon fiber reinforced resin layer 30 is between 1.2 g/cm$^3$ and 1.5 g/cm$^3$. For example, the density of the carbon fiber reinforced resin layer 30 may be 1.2 g/cm$^3$, 1.3 g/cm$^3$, 1.4 g/cm$^3$, or 1.5 g/cm$^3$. The tensile strength $\sigma_1$ MPa of the carbon fiber reinforced resin layer 30 is between 760 MPa and 860 MPa. For example, the tensile strength of the carbon fiber reinforced resin layer 30 may be 760 MPa, 770 MPa, 780 MPa, 790 MPa, 800 MPa, 810 MPa, 820 MPa, 830 MPa, 840 MPa, 850 MPa, or 860 MPa. Compared with the glass fiber reinforced resin layer, the carbon fiber reinforced resin layer 30 has higher specific strength, higher specific modulus, lower density, and lighter weight, and has excellent impact resistance, fatigue resistance, and high-temperature resistance. The carbon fiber reinforced resin layer in the foregoing condition range is used as an outer layer to sufficiently protect the metal plate (10) from damage, to effectively improve the strength of the protective plate 1, so as to reduce weight of the protective plate 1, thereby further improving a light weighting effect of the protective plate 1.

In the present disclosure, the thickness of the metal plate 10 may be between 0.5 mm and 1.5 mm. For example, the thickness of the metal plate 10 may be 0.5 mm, 0.6 mm, 0.7 mm, 0.8 mm, 0.9 mm, 1.0 mm, 1.1 mm, 1.2 mm, 1.3 mm, 1.4 mm, or 1.5 mm. The density $\rho_2$ g/cm$^3$ of the metal plate 10 is between 7.8 g/cm$^3$ and 8.7 g/cm$^3$. For example, the density of the metal plate 10 may be 7.8 g/cm$^3$, 8.0 g/cm$^3$, 8.3 g/cm$^3$, 8.5 g/cm$^3$, or 8.7 g/cm$^3$. The tensile strength $\sigma_2$ MPa of the metal plate 10 is between 590 MPa and 1180 MPa. For example, the tensile strength of the metal plate 10 may be 590 MPa, 600 MPa, 650 MPa, 700 MPa, 750 MPa, 800 MPa, 850 MPa, 900 MPa, 950 MPa, 1000 MPa, or 1180 MPa. The metal plate 10 in the foregoing condition range is used to ensure mechanical strength of the protective plate 1, to improve the impact resistance, so as to effectively reduce costs, which is beneficial to lightweight of a vehicle.

In the present disclosure, the protective plate 1 may further include a fiber reinforced resin frame 40. In some implementations of the present disclosure, the fiber reinforced resin frame 40 may be located between the first glass fiber reinforced resin layer 201 and the second glass fiber reinforced resin layer 202. The metal plate 10 is located inside the fiber reinforced resin frame 40. The first glass fiber reinforced resin layer 201 and the second glass fiber reinforced resin layer 202 are connected by using the fiber reinforced resin frame 40 to form a closed space configured to accommodate the metal plate 10. A top surface of the fiber reinforced resin frame 40 is integrally connected to the first glass fiber reinforced resin layer 201, and a bottom surface of the fiber reinforced resin frame 40 is integrally connected to the second glass fiber reinforced resin layer 202.

It may be understood that a manner in which the fiber reinforced resin frame 40, the first glass fiber reinforced resin layer 201, and the second glass fiber reinforced resin layer 202 are connected in a sealed manner to form the space configured to accommodate the metal plate 10 may include, but is not limited to, the following several manners. For example, in a first manner, the fiber reinforced resin frame 40, the first glass fiber reinforced resin layer 201, and the second glass fiber reinforced resin layer 202 are independent of each other, and the three are connected in a sealed manner through hot pressing. In a second manner, the fiber reinforced resin frame 40 and the first glass fiber reinforced resin layer 201 are integrally formed, and the integrally formed fiber reinforced resin frame 40 and first glass fiber reinforced resin layer 201 are connected to the second glass fiber reinforced resin layer 202 in a sealed manner through hot pressing. In a third manner, the fiber reinforced resin frame 40 and the second glass fiber reinforced resin layer 202 are integrally formed, and the integrally formed fiber reinforced resin frame 40 and second glass fiber reinforced resin layer 202 are connected to the first glass fiber reinforced resin layer 201 in a sealed manner through hot pressing. In a fourth manner, one part of the fiber reinforced resin frame 40 and the first glass fiber reinforced resin layer 201 are integrally formed, the other part of the fiber reinforced resin frame 40 and the second glass fiber reinforced resin layer 202 are integrally formed, and the two integrally formed structures are sealed through hot pressing.

In some other implementations of the present disclosure, the fiber reinforced resin frame 40 may be located between the first carbon fiber reinforced resin layer 301 and the second carbon fiber reinforced resin layer 302. The metal plate 10 is located inside the fiber reinforced resin frame 40. The first carbon fiber reinforced resin layer 301 and the second carbon fiber reinforced resin layer 302 are connected by using the fiber reinforced resin frame 40 to form a closed space configured to accommodate the metal plate 10. A top surface of the fiber reinforced resin frame 40 is integrally connected to the first carbon fiber reinforced resin layer 301, and a bottom surface of the fiber reinforced resin frame 40 is integrally connected to the second carbon fiber reinforced resin layer 302.

It may be understood that a manner in which the fiber reinforced resin frame 40, the first carbon fiber reinforced resin layer 301, and the second carbon fiber reinforced resin layer 302 are connected in a sealed manner to form the space configured to accommodate the metal plate 10 may include, but is not limited to, the following several manners. For example, in a first manner, the fiber reinforced resin frame 40, the first carbon fiber reinforced resin layer 301, and the second carbon fiber reinforced resin layer 302 are independent of each other, and the three are connected in a sealed manner through hot pressing. In a second manner, the fiber reinforced resin frame 40 and the first carbon fiber reinforced resin layer 301 are integrally formed, and the integrally formed fiber reinforced resin frame 40 and first carbon fiber reinforced resin layer 301 are connected to the second carbon fiber reinforced resin layer 302 in a sealed manner through hot pressing. In a third manner, the fiber reinforced resin frame 40 and the second carbon fiber reinforced resin layer 302 are integrally formed, and the integrally formed fiber reinforced resin frame 40 and second carbon fiber reinforced resin layer 302 are connected to the first carbon fiber reinforced resin layer 301 in a sealed manner through hot pressing. In a fourth manner, one part of the fiber reinforced resin frame 40 and the first carbon fiber reinforced resin layer 301 are integrally formed, the other part of the fiber reinforced resin frame 40 and the second carbon fiber reinforced resin layer 302 are integrally formed, and the two integrally formed structures are sealed through hot pressing.

In the present disclosure, the fiber reinforced resin frame 40 may be a glass fiber reinforced resin frame or a carbon fiber reinforced resin frame. When the fiber reinforced resin frame 40 is a glass fiber reinforced resin frame, at least one of the first glass fiber reinforced resin layer 201 and the second glass fiber reinforced resin layer 202 and the glass fiber reinforced resin frame may be integrally formed. For example, the first glass fiber reinforced resin layer 201 and the glass fiber reinforced resin frame may be integrally formed, the second glass fiber reinforced resin layer 202 and the glass fiber reinforced resin frame may be integrally formed, or the first glass fiber reinforced resin layer 201 and one part of the glass fiber reinforced resin frame may be integrally formed, and the second glass fiber reinforced resin layer 202 and the other part of the glass fiber reinforced resin frame may be integrally formed. In this case, the fiber reinforced resin frame 40, the first glass fiber reinforced resin layer 201, and the second glass fiber reinforced resin layer 202 are made of the same material. This helps improve the overall strength of the protective plate.

When the fiber reinforced resin frame 40 is a carbon fiber reinforced resin frame, at least one of the first carbon fiber reinforced resin layer 301 and the second carbon fiber reinforced resin layer 302 and the carbon fiber reinforced resin frame may be integrally formed. For example, the first carbon fiber reinforced resin layer 301 and the carbon fiber reinforced resin frame may be integrally formed, the second carbon fiber reinforced resin layer 302 and the carbon fiber reinforced resin frame may be integrally formed, or the first carbon fiber reinforced resin layer 301 and one part of the carbon fiber reinforced resin frame may be integrally formed, and the second carbon fiber reinforced resin layer 302 and the other part of the carbon fiber reinforced resin frame may be integrally formed. In this case, the fiber reinforced resin frame 40, the first carbon fiber reinforced resin layer 301, and the second carbon fiber reinforced resin layer 302 are made of the same material. This helps improve the overall strength of the protective plate.

In the present disclosure, the thickness of the glass fiber reinforced resin layer 20 is the same as the thickness of the carbon fiber reinforced resin layer 30. Therefore, the overall strength of the protective plate 1 can be integrally improved, so that the protective plate 1 has excellent impact resistance.

In the present disclosure, a thickness of the first glass fiber reinforced resin layer 201 is the same as a thickness of the second glass fiber reinforced resin layer 202. A thickness of the first carbon fiber reinforced resin layer 301 is the same as a thickness of the second carbon fiber reinforced resin layer 302. In other words, the first glass fiber reinforced resin layer 201 and the second glass fiber reinforced resin layer 202 used as inner protective layers are symmetrically arranged relative to the metal plate 10, and the first carbon fiber reinforced resin layer 301 and the second carbon fiber reinforced resin layer 302 used as outer protective layers are symmetrically arranged relative to the metal plate 10. In this case, it is more conductive to utilize advantages of the toughness of the glass fiber reinforced resin layer 20 and the high modulus of the carbon fiber reinforced resin layer 30, thereby improving the protective effect of the protective plate 1.

In the present disclosure, the thickness of the first glass fiber reinforced resin layer 201, the thickness of the second glass fiber reinforced resin layer 202, the thickness of the first carbon fiber reinforced resin layer 301, and the thickness of the second carbon fiber reinforced resin layer 302 are the same. In this way, the composite structure formed by the glass fiber reinforced resin layer, the carbon fiber reinforced resin layer, and the metal plate has high strength, and can have a good buffering function when the protective plate 1 is subjected to energy impact, to improve an energy absorbing capability of the protective plate 1, so that the protective plate 1 has an excellent protective effect.

According to a second aspect of the present disclosure, a vehicle is provided, including a battery pack 2 and the foregoing protective plate 1. The protective plate 1 is arranged below the battery pack 2. The vehicle has features and advantages of the foregoing protective plate 1. Details are not described herein again.

In the present disclosure, a buffer zone may be provided between the battery pack 2 and the protective plate 1. The buffer zone is provided, so that when the protective plate 1 is subjected to energy impact, a force buffer and protection function for the battery pack 2 can be effectively implemented, thereby helping improve a protective effect of the protective plate 1.

In the present disclosure, the buffer zone may be filled with a buffer layer, and the buffer layer is selected from a honeycomb material or a hard foam material. The honeycomb material or the hard foam material can buffer and absorb part of energy of external impact, and improve an anti-compression deformation capability of the protective plate 1, thereby further protecting the battery pack 2.

In some implementations of the present disclosure, the honeycomb material may be selected from a PP honeycomb material or an aluminum honeycomb material. The hard foam material is selected from a PU hard foam material, a PET hard foam material, a PMI hard foam material, a PVC hard foam material, an MPP hard foam material, a PLA hard foam material, a PI hard foam material, or an EPTU foam material.

In the present disclosure, a second glass fiber reinforced resin layer 202 may be located on a side of a metal plate 10 facing away from the battery pack 2. A thickness of the second glass fiber reinforced resin layer 202 is greater than a thickness of a first glass fiber reinforced resin layer 201. When the second glass fiber reinforced resin layer 202 is located on the side of the metal plate 10 facing away from the battery pack 2, the second glass fiber reinforced resin layer 202 is closer to the ground than the first glass fiber reinforced resin layer 201. In this case, the thickness of the second glass fiber reinforced resin layer 202 is controlled to be greater than the thickness of the first glass fiber reinforced resin layer 201, so that impact resistance at the bottom of the protective plate 1 can be further improved, and resistance to scratching of the protective plate 1 is also greater.

In the present disclosure, a second carbon fiber reinforced resin layer 302 is located on a side of the metal plate 10 facing away from the battery pack 2. A thickness of the second carbon fiber reinforced resin layer 302 is greater than a thickness of a first carbon fiber reinforced resin layer 301. When the second carbon fiber reinforced resin layer 302 is located on the side of the metal plate 10 facing away from the battery pack 2, the second carbon fiber reinforced resin layer 302 is closer to the ground than the first carbon fiber reinforced resin layer 301. In this case, the thickness of the second carbon fiber reinforced resin layer 302 is controlled to be greater than the thickness of the first carbon fiber reinforced resin layer 301, so that impact resistance at the bottom of the protective plate 1 can be further improved, and resistance to scratching of the protective plate 1 is also greater.

The following further describes the present disclosure by using embodiments.

Embodiment 1

A protective plate disclosed in the present disclosure is described in this embodiment, including a metal plate, a glass fiber reinforced resin layer, and a carbon fiber reinforced resin layer. The glass fiber reinforced resin layer includes a first glass fiber reinforced resin layer and a second glass fiber reinforced resin layer. The first glass fiber reinforced resin layer is located on a side of the metal plate, and the second glass fiber reinforced resin layer is located on a side of the metal plate facing away from the first glass fiber reinforced resin layer. The carbon fiber reinforced resin layer includes a first carbon fiber reinforced resin layer and a second carbon fiber reinforced resin layer. The first carbon fiber reinforced resin layer is located on a side of the first glass fiber reinforced resin layer away from the metal plate, and the second carbon fiber reinforced resin layer is located on a side of the second glass fiber reinforced resin layer away from the metal plate. The metal plate is accommodated in closed space formed by connecting the glass fiber reinforced resin layer and the carbon fiber reinforced resin layer. A thickness of the glass fiber reinforced resin layer is $d_0$ mm. A thickness of the carbon fiber reinforced resin layer is $d_1$ mm. A thickness of the metal plate is $d_2$ mm. Density of the glass fiber reinforced resin layer is $\rho_0$ g/cm$^3$. Density of the carbon fiber reinforced resin layer is $\rho_1$ g/cm$^3$. Density of the metal plate is $\rho_2$ g/cm$^3$. Tensile strength of the glass fiber reinforced resin layer is $\sigma_0$ MPa. Tensile strength of the carbon fiber reinforced resin layer is $\sigma_1$ MPa. Tensile strength of the metal plate is $\sigma_2$ MPa.

A thickness test method is as follows:

Five random test points were selected by using a caliper or a micrometer, and an average value of measurement values was used as a thickness of a product.

The foregoing density is bulk density, and a test method therefor is as follows:

Test methods for $\rho_0$ and $\rho_1$ are the same, which are measured based on the national standard "GB/T 1033.1-2008 Plastics-Determination of density of non-cellular plastics-Part 1", where density=weight/volume. $\rho_2$ is the density of the metal plate, and is measured based on the national standard "GB/T 700-2018 Determination-Part 1", where density=-weight/volume.

A tensile strength test method is as follows:

Test methods for $\sigma_0$ and $\sigma_1$ are the same. Tensile strength of a sample=maximum tensile force/cross-sectional area. Refer to "GB/T 1040-2006 Plastics-Determination of tensile properties". A 1A dumbbell sample is used, maximum tensile stress that the sample withstands during a tensile test may be read based on an instrument force value, a tensile stress-strain curve is drawn, and the maximum tensile strength can be read from the curve. $\sigma_2$ is the tensile strength of the metal plate, that is, tensile strength of the sample=maximum tensile force/cross-sectional area. Refer to "GB/T 228-87 Metallic materials-Tensile testing method". A uniaxial tensile sample is used, maximum tensile stress that the sample withstands during a tensile test may be read based on an instrument force value, a tensile stress-strain curve is drawn, and the maximum tensile strength can be read from the curve.

Embodiments 2 to 48

A protective plate disclosed in the present disclosure is described in Embodiments 2 to 48, including most of the structures in Embodiment 1, and a difference lies in that a metal plate, a glass fiber reinforced resin layer, and a carbon fiber reinforced resin layer that are provided in Embodiments 2 to 48 in Table 1 are used.

Comparative examples 1 to 4

The protective plate disclosed in the present disclosure is described in Comparative examples 1 to 4, including most of the structures in Embodiment 1, and a difference lies in that a metal plate, a glass fiber reinforced resin layer, and a carbon fiber reinforced resin layer that are provided in Comparative examples 1 to 4 in Table 1 are used.

Table 1

|  |  | $d_0$ | $\rho_0$ | $\sigma_0$ | $d_1$ | $\rho_1$ | $\sigma_1$ | $d_2$ | $\rho_2$ | $\sigma_2$ | Value of K |
|---|---|---|---|---|---|---|---|---|---|---|---|
|  | Embodiment 1 | 1 | 1.6 | 380 | 1 | 1.2 | 860 | 1 | 7.8 | 590 | 0.079 |
|  | Embodiment 2 | 1.2 | 1.6 | 380 | 1 | 1.2 | 860 | 1 | 7.8 | 590 | 0.074 |
|  | Embodiment 3 | 2 | 1.6 | 380 | 1 | 1.2 | 860 | 1 | 7.8 | 590 | 0.059 |
|  | Embodiment 4 | 0.8 | 1.6 | 380 | 1 | 1.2 | 860 | 1 | 7.8 | 590 | 0.085 |
|  | Embodiment 5 | 1 | 1.6 | 380 | 1 | 1.2 | 860 | 1 | 7.8 | 1180 | 0.120 |
|  | Embodiment 6 | 1.2 | 1.6 | 380 | 1 | 1.2 | 860 | 1 | 7.8 | 1180 | 0.112 |
|  | Embodiment 7 | 2 | 1.6 | 380 | 1 | 1.2 | 860 | 1 | 7.8 | 1180 | 0.090 |
|  | Embodiment 8 | 0.8 | 1.6 | 380 | 1 | 1.2 | 860 | 1 | 7.8 | 1180 | 0.128 |
|  | Embodiment 9 | 1 | 1.5 | 280 | 1 | 1.2 | 860 | 1 | 7.8 | 1180 | 0.126 |
|  | Embodiment 10 | 1 | 1.7 | 280 | 1 | 1.2 | 860 | 1 | 7.8 | 1180 | 0.124 |
|  | Embodiment 11 | 1 | 1.9 | 280 | 1 | 1.2 | 860 | 1 | 7.8 | 1180 | 0.121 |
|  | Embodiment 12 | 1 | 1.3 | 280 | 1 | 1.2 | 860 | 1 | 7.8 | 1180 | 0.128 |
|  | Embodiment 13 | 1 | 2 | 280 | 1 | 1.2 | 860 | 1 | 7.8 | 1180 | 0.120 |

(continued)

| | $d_0$ | $\rho_0$ | $\sigma_0$ | $d_1$ | $\rho_1$ | $\sigma_1$ | $d_2$ | $\rho_2$ | $\sigma_2$ | Value of K |
|---|---|---|---|---|---|---|---|---|---|---|
| Embodiment 14 | 1 | 1.8 | 280 | 1 | 1.2 | 860 | 1 | 7.8 | 1180 | 0.122 |
| Embodiment 15 | 1 | 1.8 | 300 | 1 | 1.2 | 860 | 1 | 7.8 | 1180 | 0.121 |
| Embodiment 16 | 1 | 1.8 | 350 | 1 | 1.2 | 860 | 1 | 7.8 | 1180 | 0.119 |
| Embodiment 17 | 1 | 1.8 | 370 | 1 | 1.2 | 860 | 1 | 7.8 | 1180 | 0.118 |
| Embodiment 18 | 1 | 1.8 | 260 | 1 | 1.2 | 860 | 1 | 7.8 | 1180 | 0.124 |
| Embodiment 19 | 1 | 1.6 | 360 | 1 | 1.2 | 860 | 1 | 7.8 | 1180 | 0.121 |
| Embodiment 20 | 1 | 1.6 | 360 | 1.5 | 1.2 | 860 | 1 | 7.8 | 1180 | 0.103 |
| Embodiment 21 | 1 | 1.6 | 360 | 2 | 1.2 | 860 | 1 | 7.8 | 1180 | 0.090 |
| Embodiment 22 | 1 | 1.6 | 360 | 0.8 | 1.2 | 860 | 1 | 7.8 | 1180 | 0.129 |
| Embodiment 23 | 1 | 1.6 | 360 | 1.2 | 1.2 | 860 | 1 | 7.8 | 1180 | 0.113 |
| Embodiment 24 | 1 | 1.6 | 360 | 1.2 | 1.3 | 860 | 1 | 7.8 | 1180 | 0.112 |
| Embodiment 25 | 1 | 1.6 | 360 | 1.2 | 1.5 | 860 | 1 | 7.8 | 1180 | 0.110 |
| Embodiment 26 | 1 | 1.6 | 360 | 1.2 | 1 | 860 | 1 | 7.8 | 1180 | 0.115 |
| Embodiment 27 | 1 | 1.6 | 360 | 1.2 | 1.1 | 760 | 1 | 7.8 | 1180 | 0.119 |
| Embodiment 28 | 1 | 1.6 | 360 | 1.2 | 1.1 | 800 | 1 | 7.8 | 1180 | 0.117 |
| Embodiment 29 | 1 | 1.6 | 360 | 1.2 | 1.1 | 850 | 1 | 7.8 | 1180 | 0.115 |
| Embodiment 30 | 1 | 1.6 | 360 | 1.2 | 1.1 | 740 | 1 | 7.8 | 1180 | 0.120 |
| Embodiment 31 | 1 | 1.6 | 360 | 1.2 | 1.2 | 830 | 0.5 | 7.8 | 1180 | 0.068 |
| Embodiment 32 | 1 | 1.6 | 360 | 1.2 | 1.2 | 830 | 0.9 | 7.8 | 1180 | 0.106 |
| Embodiment 33 | 1 | 1.6 | 360 | 1.2 | 1.2 | 830 | 1.5 | 7.8 | 1180 | 0.149 |
| Embodiment 34 | 1 | 1.6 | 360 | 1.2 | 1.2 | 830 | 0.4 | 7.8 | 1180 | 0.056 |
| Embodiment 35 | 1 | 1.6 | 360 | 1.2 | 1.2 | 830 | 0.7 | 7.8 | 1180 | 0.088 |
| Embodiment 36 | 1 | 1.6 | 360 | 1.2 | 1.2 | 830 | 0.7 | 8.3 | 1180 | 0.090 |
| Embodiment 37 | 1 | 1.6 | 360 | 1.2 | 1.2 | 830 | 0.7 | 8.7 | 1180 | 0.091 |
| Embodiment 38 | 1 | 1.6 | 360 | 1.2 | 1.2 | 830 | 0.7 | 7.6 | 1180 | 0.088 |
| Embodiment 39 | 1 | 1.6 | 360 | 1.2 | 1.2 | 830 | 0.7 | 7.6 | 590 | 0.058 |
| Embodiment 40 | 1 | 1.6 | 360 | 1.2 | 1.2 | 830 | 0.7 | 7.6 | 760 | 0.069 |
| Embodiment 41 | 1 | 1.6 | 360 | 1.2 | 1.2 | 830 | 0.7 | 7.6 | 890 | 0.075 |
| Embodiment 42 | 1 | 1.6 | 360 | 1.2 | 1.2 | 830 | 0.7 | 7.6 | 980 | 0.080 |
| Embodiment 43 | 1 | 1.6 | 360 | 1.2 | 1.2 | 830 | 0.7 | 7.6 | 1070 | 0.084 |
| Embodiment 44 | 1 | 1.6 | 360 | 1.2 | 1.2 | 830 | 0.7 | 7.6 | 1160 | 0.087 |
| Embodiment 45 | 1 | 1.6 | 360 | 1.2 | 1.2 | 830 | 0.7 | 7.6 | 550 | 0.056 |
| Embodiment 46 | 1.5 | 1.6 | 380 | 1 | 1.2 | 860 | 1.5 | 7.8 | 760 | 0.105 |
| Embodiment 47 | 1.2 | 1.6 | 380 | 1.2 | 1.2 | 860 | 1.5 | 7.8 | 760 | 0.108 |
| Embodiment 48 | 1 | 1.6 | 340 | 1.5 | 1.2 | 830 | 1 | 7.8 | 1180 | 0.106 |
| Comparative example 1 | 2 | 1.6 | 380 | 1 | 1.2 | 860 | 0.5 | 7.8 | 760 | 0.040 |
| Comparative example 2 | 2 | 1.6 | 380 | 2 | 1.2 | 860 | 0.5 | 7.8 | 890 | 0.034 |
| Comparative example 3 | 1 | 1.9 | 380 | 1 | 1.2 | 860 | 0.5 | 7.6 | 590 | 0.046 |

(continued)

|  | $d_0$ | $\rho_0$ | $\sigma_0$ | $d_1$ | $\rho_1$ | $\sigma_1$ | $d_2$ | $\rho_2$ | $\sigma_2$ | Value of K |
|---|---|---|---|---|---|---|---|---|---|---|
| Comparative example 4 | 2 | 1.6 | 280 | 1 | 1.2 | 860 | 0.5 | 7.8 | 590 | 0.036 |

Note: Value of $K = \dfrac{d_2}{d_0 + d_1 + d_2} * \dfrac{\rho_2}{\rho_0 + \rho_1 + \rho_2} * \dfrac{\sigma_2}{\sigma_0 + \sigma_1 + \sigma_2}$ .

Performance test

The protective plates provided in the foregoing embodiments and comparative examples are subjected to the following performance tests, and test results are recorded in Table 2.

A sphere with a diameter of 25 mm and weight of 10 kg was used as an impact head to impact the protective plate, to simulate a working condition in which the protective plate was hit by a foreign object. A center point of a protective plate of a battery and four points around the center point were selected as impact points, and five impacts were performed (where a height of the sphere may be adjusted to give the sphere different impact energy). A depression deformation amount of the protective plate at each impact point was measured, and an impact point with the largest depression deformation amount was selected and recorded as a depression deformation amount of the protective plate.

Table 2

|  | Protective plate depression depth/mm | Impact energy |
|---|---|---|
| Embodiment 1 | 7.84 | 250 J |
| Embodiment 2 | 6.71 | 250 J |
| Embodiment 3 | 7.07 | 250 J |
| Embodiment 4 | 7.98 | 250 J |
| Embodiment 5 | 6.74 | 250 J |
| Embodiment 6 | 5.56 | 250 J |
| Embodiment 7 | 6.27 | 250 J |
| Embodiment 8 | 6.83 | 250 J |
| Embodiment 9 | 6.94 | 250 J |
| Embodiment 10 | 6.81 | 250 J |
| Embodiment 11 | 6.57 | 250 J |
| Embodiment 12 | 7.01 | 250 J |
| Embodiment 13 | 6.43 | 250 J |
| Embodiment 14 | 6.33 | 250 J |
| Embodiment 15 | 6.02 | 250 J |
| Embodiment 16 | 5.63 | 250 J |
| Embodiment 17 | 5.55 | 250 J |
| Embodiment 18 | 6.47 | 250 J |
| Embodiment 19 | 5.33 | 250 J |
| Embodiment 20 | 6.02 | 250 J |
| Embodiment 21 | 5.63 | 250 J |
| Embodiment 22 | 6.61 | 250 J |
| Embodiment 23 | 5.31 | 250 J |
| Embodiment 24 | 5.21 | 250 J |
| Embodiment 25 | 5.01 | 250 J |
| Embodiment 26 | 5.53 | 250 J |

(continued)

|  | Protective plate depression depth/mm | Impact energy |
|---|---|---|
| Embodiment 27 | 6.01 | 250 J |
| Embodiment 28 | 5.63 | 250 J |
| Embodiment 29 | 5.54 | 250 J |
| Embodiment 30 | 6.13 | 250 J |
| Embodiment 31 | 6.17 | 250 J |
| Embodiment 32 | 3.12 | 250 J |
| Embodiment 33 | 2.57 | 250 J |
| Embodiment 34 | 6.77 | 250 J |
| Embodiment 35 | 5.63 | 250 J |
| Embodiment 36 | 5.45 | 250 J |
| Embodiment 37 | 5.39 | 250 J |
| Embodiment 38 | 6.03 | 250 J |
| Embodiment 39 | 7.47 | 250 J |
| Embodiment 40 | 7.05 | 250 J |
| Embodiment 41 | 6.47 | 250 J |
| Embodiment 42 | 6.07 | 250 J |
| Embodiment 43 | 5.57 | 250 J |
| Embodiment 44 | 5.09 | 250 J |
| Embodiment 45 | 7.69 | 250 J |
| Embodiment 46 | 3.44 | 250 J |
| Embodiment 47 | 2.83 | 250 J |
| Embodiment 48 | 3.67 | 250 J |
| Comparative example 1 | Penetrated | 250 J |
| Comparative example 2 | Penetrated | 250 J |
| Comparative example 3 | Penetrated | 250 J |
| Comparative example 4 | Penetrated | 250 J |

It may be learned from the test results in Table 2 that the protective plate of the present disclosure satisfies a condition in which a thickness $d_0$ mm of the glass fiber reinforced resin layer, a thickness $d_1$ mm of the carbon fiber reinforced resin layer, a thickness $d_2$ mm of the metal plate, density $\rho_0$ g/cm$^3$ of the glass fiber reinforced resin layer, density $\rho_1$ g/cm$^3$ of the carbon fiber reinforced resin layer, density $\rho_2$ g/cm$^3$ of the metal plate, tensile strength $0$ MPa of the glass fiber reinforced resin layer, tensile strength $\sigma_1$ MPa of the carbon fiber reinforced resin layer, and tensile strength $\sigma_2$ MPa of the metal plate satisfy $\dfrac{d_2}{d_0 + d_1 + d_2} * \dfrac{\rho_2}{\rho_0 + \rho_1 + \rho_2} * \dfrac{\sigma_2}{\sigma_0 + \sigma_1 + \sigma_2} > 0.046$, in this case, it is beneficial to obtain a protective plate having light weight, high strength, great resistance to scratching, and excellent impact resistance.

In the description of the present specification, reference terms such as "an embodiment", "some embodiments", "exemplary embodiment", "example", "specific example", or "some implementation" mean that a specific feature, a structure, a material, or a characteristic described with reference to the embodiment or example are included in at least one embodiment or example of the present disclosure. In the present specification, schematic descriptions of the foregoing terms do not necessarily refer to a same embodiment or example.

Although embodiments of the present disclosure have been shown and described, a person of ordinary skill in the art may understand that various changes, modifications, replacements, and variations may be made to these embodiments without departing from the principle and spirit of the present disclosure. The scope of the present disclosure is defined by the claims and their equivalent.

**Claims**

1. A protective plate, comprising:

   a metal plate (10);
   a glass fiber reinforced resin layer (20), the glass fiber reinforced resin layer (20) comprising a first glass fiber reinforced resin layer (201) and a second glass fiber reinforced resin layer (202), the first glass fiber reinforced resin layer (201) being located on a side of the metal plate (10), and the second glass fiber reinforced resin layer (202) being located on a side of the metal plate (10) facing away from the first glass fiber reinforced resin layer (201); and
   a carbon fiber reinforced resin layer (30), the carbon fiber reinforced resin layer (30) comprising a first carbon fiber reinforced resin layer (301) and a second carbon fiber reinforced resin layer (302), the first carbon fiber reinforced resin layer (301) being located on a side of the first glass fiber reinforced resin layer (201) away from the metal plate (10), and the second carbon fiber reinforced resin layer (302) being located on a side of the second glass fiber reinforced resin layer (202) away from the metal plate (10),
   the metal plate (10) being sealed by the glass fiber reinforced resin layer (20) and/or the carbon fiber reinforced resin layer (30), and
   the metal plate (10), the glass fiber reinforced resin layer (20), and the carbon fiber reinforced resin layer (30) satisfy the following condition:

$$\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} > 0.046.$$

   wherein $d_0$ is a thickness of the glass fiber reinforced resin layer (20) in a unit of mm;
   $d_1$ is a thickness of the carbon fiber reinforced resin layer (30) in a unit of mm;
   $d_2$ is a thickness of the metal plate (10) in a unit of mm;
   $\rho_0$ is density of the glass fiber reinforced resin layer (20) in a unit of g/cm$^3$;
   $\rho_1$ is density of the carbon fiber reinforced resin layer (30) in a unit of g/cm$^3$;
   $\rho_2$ is density of the metal plate (10) in a unit of g/cm$^3$;
   $\sigma_0$ is tensile strength of the glass fiber reinforced resin layer (20) in a unit of MPa;
   $\sigma_1$ is tensile strength of the carbon fiber reinforced resin layer (30) in a unit of MPa; and
   $\sigma_2$ is tensile strength of the metal plate (10) in a unit of MPa.

2. The protective plate according to claim 1, wherein $\frac{d_2}{d_0 + d_1 + d_2} * \frac{\rho_2}{\rho_0 + \rho_1 + \rho_2} * \frac{\sigma_2}{\sigma_0 + \sigma_1 + \sigma_2} < 0.18$ .

3. The protective plate according to claim 1 or 2, wherein the thickness $d_0$ mm of the glass fiber reinforced resin layer (20) is between 1.0 mm and 2.0 mm, the density $\rho_0$ g/cm$^3$ of the glass fiber reinforced resin layer (20) is between 1.5 g/cm$^3$ and 1.9 g/cm$^3$, and the tensile strength $\sigma_0$ MPa of the glass fiber reinforced resin layer (20) is between 280 MPa and 380 MPa.

4. The protective plate according to any one of claims 1 to 3, wherein the thickness $d_1$ mm of the carbon fiber reinforced resin layer (30) is between 1.0 mm and 2.0 mm, the density $\rho_1$ g/cm$^3$ of the carbon fiber reinforced resin layer (30) is between 1.2 g/cm$^3$ and 1.5 g/cm$^3$, and the tensile strength $\sigma_1$ MPa of the carbon fiber reinforced resin layer (30) is between 760 MPa and 860 MPa.

5. The protective plate according to any one of claims 1 to 4, wherein the thickness $d_2$ mm of the metal plate (10) is between 0.5 mm and 1.5 mm, the density $\rho_2$ g/cm$^3$ of the metal plate (10) is between 7.8 g/cm$^3$ and 8.7 g/cm$^3$, and the tensile strength $\sigma_2$ MPa of the metal plate (10) is between 590 MPa and 1180 MPa.

6. The protective plate according to any one of claims 1 to 5, further comprising a fiber reinforced resin frame (40),

   the fiber reinforced resin frame (40) being located between the first glass fiber reinforced resin layer (201) and the second glass fiber reinforced resin layer (202), the metal plate (10) being located inside the fiber reinforced resin frame (40), a top surface of the fiber reinforced resin frame (40) being integrally connected to the first glass fiber reinforced resin layer (201), and a bottom surface of the fiber reinforced resin frame (40) being integrally connected to the second glass fiber reinforced resin layer (202); or

the fiber reinforced resin frame (40) being located between the first carbon fiber reinforced resin layer (301) and the second carbon fiber reinforced resin layer (302), the metal plate (10) being located inside the fiber reinforced resin frame (40), a top surface of the fiber reinforced resin frame (40) being integrally connected to the first carbon fiber reinforced resin layer (301), and a bottom surface of the fiber reinforced resin frame (40) being integrally connected to the second carbon fiber reinforced resin layer (302).

7. The protective plate according to any one of claims 1 to 6, wherein the thickness of the glass fiber reinforced resin layer (20) is the same as the thickness of the carbon fiber reinforced resin layer (30).

8. The protective plate according to any one of claims 1 to 7, wherein a thickness of the first glass fiber reinforced resin layer (201) is the same as a thickness of the second glass fiber reinforced resin layer (202); and a thickness of the first carbon fiber reinforced resin layer (301) is the same as a thickness of the second carbon fiber reinforced resin layer (302).

9. The protective plate according to any one of claims 1 to 8, wherein the thickness of the first glass fiber reinforced resin layer (201), the thickness of the second glass fiber reinforced resin layer (202), the thickness of the first carbon fiber reinforced resin layer (301), and the thickness of the second carbon fiber reinforced resin layer (302) are the same.

10. A vehicle, comprising a battery pack (2) and the protective plate (1) according to any one of claims 1 to 9, the protective plate (1) being arranged below the battery pack (2).

11. The vehicle according to claim 10, wherein a buffer zone is provided between the battery pack (2) and the protective plate (1).

12. The vehicle according to claim 11, wherein the buffer zone is filled with a buffer layer, and the buffer layer is selected from a honeycomb material or a hard foam material.

FIG. 1

FIG. 2

## INTERNATIONAL SEARCH REPORT

| International application No. |
|---|
| **PCT/CN2023/143162** |

| A. | CLASSIFICATION OF SUBJECT MATTER |
|---|---|

B60R 13/08(2006.01)i; B60L 3/00(2019.01)i; B32B 27/20(2006.01)i; B32B 15/00(2006.01)i; B32B 15/08(2006.01)i; B32B 3/08(2006.01)i; H01M50/242(2021.01)i

According to International Patent Classification (IPC) or to both national classification and IPC

| B. | FIELDS SEARCHED |
|---|---|

Minimum documentation searched (classification system followed by classification symbols)

IPC: B60R B60L B32B H01M

Documentation searched other than minimum documentation to the extent that such documents are included in the fields searched

Electronic data base consulted during the international search (name of data base and, where practicable, search terms used)

CNABS: VCN: VEN; ENTXT; CNKI: 比亚迪, 电池, 防护板, 底板, 金属, 玻璃纤维, 碳纤维, 树脂, 厚度, 密度, 拉伸强度, 抗拉强度, battery, protect+, plate, metal, fibre, glass, carbon, resin, thickness, density, tensile, strength

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 217788632 U (BYD CO., LTD.) 11 November 2022 (2022-11-11)<br>description, paragraphs [0038]-[0117], and figures 1-8 | 1-12 |
| A | CN 216980743 U (BYD CO., LTD.) 15 July 2022 (2022-07-15)<br>entire document | 1-12 |
| A | CN 217319639 U (JIANGSU QIYI TECHNOLOGIES CO., LTD.) 30 August 2022 (2022-08-30)<br>entire document | 1-12 |
| A | CN 217788608 U (BYD CO., LTD.) 11 November 2022 (2022-11-11)<br>entire document | 1-12 |
| A | JP 2006278100 A (JAPAN VILENE CO., LTD.) 12 October 2006 (2006-10-12)<br>entire document | 1-12 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 March 2024** | **15 April 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/143162**

| Patent document cited in search report | | | Publication date (day/month/year) | Patent family member(s) | | | Publication date (day/month/year) |
|---|---|---|---|---|---|---|---|
| CN | 217788632 | U | 11 November 2022 | WO | 2023231957 | A1 | 07 December 2023 |
| CN | 216980743 | U | 15 July 2022 | WO | 2023143040 | A1 | 03 August 2023 |
| CN | 217319639 | U | 30 August 2022 | | None | | |
| CN | 217788608 | U | 11 November 2022 | WO | 2023231950 | A1 | 07 December 2023 |
| | | | | CN | 117199668 | A | 08 December 2023 |
| JP | 2006278100 | A | 12 October 2006 | JP | 4868756 | B2 | 01 February 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211729452
- GB 103312008 T
- GB 7002018 T
- GB 10402006 T
- GB 22887 T